# EUROPEAN PATENT APPLICATION

(11) **EP 4 697 790 A1**
(43) Date of publication of application: **18.02.2026**
(21) Application number: 23933070.7
(22) Date of filing: 14.04.2023
(51) Int. Cl.: H04W 24/10, H04W 16/28

(54) **BASE STATION DEVICE, TERMINAL DEVICE, AND WIRELESS COMMUNICATION SYSTEM**

(71) Applicant: 1FINITY INC., Kawasaki-shi, Kanagawa 211-8588 (JP)
(72) Inventor: CHENG, Huiting, Kawasaki-shi, Kanagawa 211-8588 (JP); SHIMOMURA, Tsuyoshi, Kawasaki-shi, Kanagawa 211-8588 (JP)
(74) Representative: Haseltine Lake Kempner LLP
(86) International application number: PCT/JP2023/015204
(87) International publication number: WO 2024/214294

(57) **Abstract**

A terminal device includes, a communicator configured to perform a report process of receiving a reference signal from a base station device, measuring the reference signal for a plurality of measurement items, and transmitting a report to the base station device, the report including a plurality of measurement results corresponding to the plurality of measurement items, and a controller configured to assign priorities to the plurality of measurement results, respectively, and determine an individual processing amount to be used for measuring each of the plurality of measurement items and a processing amount of the report.

## Description

### TECHNICAL FIELD

The present invention relates to a base station device, a terminal device, and a wireless communication system.

### BACKGROUND ART

In recent years, various studies on energy saving technologies for base station devices in wireless communication systems have been conducted at international standardization meetings and the like (Non-Patent Literature 28). As energy saving technologies for base stations, adaptation of spatial elements and adaptation of transmission power have been proposed (Non-Patent Literature 29). The spatial elements include, for example, elements related to transmission and reception of radio waves, such as wireless transceiver circuits or antennas. The base station device includes a plurality of wireless transceiver circuits and a plurality of antennas. The base station device can change the number of spatial elements (e.g., wireless transceiver circuits or antennas) or the transmission power, for example, according to the communication load. Specifically, when the communication load between the base station device and the terminal device decreases, the base station device controls one or more wireless transceiver circuits to be turned off, reduces the number of a plurality of antennas to be used, and reduces the transmission power of wireless signals to be transmitted to the terminal device. That is, dynamic adaptation of the spatial elements or adaptation of the transmission power according to the communication load is realized. As a result, the power consumption of the base station device is reduced while suppressing the throughput loss.

The base station device acquires, for example, a channel state information (CSI) report from the terminal device, and determines adaptation of transmission parameters based on the communication load and radio conditions. In addition, the base station device performs adaptation of appropriate transmission parameters, and transmits wireless signals to the terminal device with the adapted number of wireless transceiver circuits or the adapted transmission power. Here, the transmission parameters include, for example, a modulation scheme, a coding rate, the number of transmission layers, MIMO precoding, etc. Furthermore, the transmission parameter includes, for example, the number of spatial elements, transmission power, etc.

The CSI report is a report transmitted from the terminal device regularly or irregularly, and includes a measurement result when receiving a reference signal (CSI-RS), which is a reference signal transmitted from the base station device.

In order to control appropriate transmission parameters corresponding to patterns of different spatial elements or different transmission powers, the base station device may transmit a plurality of types of CSI-RSs and acquire a plurality of types of measurement results. The base station device transmits, for example, CSI-RSs corresponding to different numbers of antenna ports (such as 32 antenna ports and 16 antenna ports), and acquires measurement results corresponding to the different numbers of antenna ports, respectively. The base station device determines appropriate transmission parameters based on these measurement results. Here, the CSI-RSs corresponding to different numbers of antenna ports may be transmitted using separate CSI-RS resources. In addition, the CSI-RSs corresponding to different numbers of antenna ports may also be transmitted using the same CSI-RS resource. In addition, for example, the base station device transmits CSI-RSs corresponding to different transmission powers, and acquires measurement results corresponding to the different transmission powers, respectively. The base station device determines appropriate transmission parameters based on these measurement results. In addition, for example, after instructing the terminal to calculate and transmit measurement results according to offsets of different hypothesis transmission powers between CSI-RSs and PDSCHs, the base station device transmits CSI-RSs at a constant transmission power, and acquires measurement results corresponding to the offsets of different hypothesis transmission powers between the CSI-RSs and the PDSCHs. The base station device determines appropriate transmission parameters based on these measurement results.

When transmitting a plurality of types of measurement results, for example, the terminal device can transmit one CSI report including the plurality of types of measurement results to the base station device. Hereinafter, the scheme in which the terminal device transmits one CSI report for each measurement result may be referred to as a single-CSI feedback scheme. Hereinafter, the scheme in which the terminal device transmits a plurality of measurement results in one CSI report may be referred to as a multi-CSI feedback scheme.

CSI report technologies are described in the following literatures.

### CITATION LIST

### NON-PATENT LITERATURE

Non-Patent Literature 1: 3GPP TS 36.133 V17.7.0
Non-Patent Literature 2: 3GPP TS 36.211 V17.2.0
Non-Patent Literature 3: 3GPP TS 36.212 V17.1.0
Non-Patent Literature 4: 3GPP TS 36.213 V17.3.0
Non-Patent Literature 5: 3GPP TS 36.214 V17.0.0
Non-Patent Literature 6: 3GPP TS 36.300 V17.2.0
Non-Patent Literature 7: 3GPP TS 36.321 V17.2.0
Non-Patent Literature 8: 3GPP TS 36.322 V17.0.0
Non-Patent Literature 9: 3GPP TS 36.323 V17.1.0
Non-Patent Literature 10: 3GPP TS 36.331 V17.2.0
Non-Patent Literature 11: 3GPP TS 37.324 V17.0.0
Non-Patent Literature 12: 3GPP TS 37.340 V17.2.0
Non-Patent Literature 13: 3GPP TS 38.133 V17.7.0
Non-Patent Literature 14: 3GPP TS 38.201 V17.0.0
Non-Patent Literature 15: 3GPP TS 38.202 V17.2.0
Non-Patent Literature 16: 3GPP TS 38.211 V17.3.0
Non-Patent Literature 17: 3GPP TS 38.212 V17.3.0
Non-Patent Literature 18: 3GPP TS 38.213 V17.3.0
Non-Patent Literature 19: 3GPP TS 38.214 V17.3.0
Non-Patent Literature 20: 3GPP TS 38.215 V17.2.0
Non-Patent Literature 21: 3GPP TS 38.300 V17.2.0
Non-Patent Literature 22: 3GPP TS 38.321 V17.2.0
Non-Patent Literature 23: 3GPP TS 38.322 V17.1.0
Non-Patent Literature 24: 3GPP TS 38.323 V17.2.0
Non-Patent Literature 25: 3GPP TS 38.331 V17.2.0
Non-Patent Literature 26: 3GPP TS 38.420 V17.2.0
Non-Patent Literature 27: 3GPP TS 38.423 V17.2.0
Non-Patent Literature 28: RP-223540
Non-Patent Literature 29: 3GPP TR 38.864 V18.0.0

### SUMMARY OF INVENTION

### PROBLEMS TO BE SOLVED BY THE INVENTION

However, in order for the terminal device to update the CSI report, it is necessary to measure CSI-RSs and calculate measurement results, which requires a processing capability. In the multi-CSI feedback scheme, when the processing capability required to perform measurements and calculations for all the measurement items is larger than the processing capability of the terminal device, the terminal device does not perform measurements and calculations for all the measurement items in a certain case. In this manner, even though the terminal device has a processing capability to measure and calculate some measurement items, the terminal device is not capable of utilizing its processing capability because the terminal device does not perform measurements and calculations for all the measurement items.

Therefore, one disclosure provides a base station device, a terminal device, and a wireless communication system that efficiently use the processing capability of the terminal device in a CSI report.

### MEANS FOR SOLVING THE PROBLEMS

A terminal device includes, a communicator configured to perform a report process of receiving a reference signal from a base station device, measuring the reference signal for a plurality of measurement items, and transmitting a report to the base station device, the report including a plurality of measurement results corresponding to the plurality of measurement items, and a controller configured to assign priorities to the plurality of measurement results, respectively, and determine an individual processing amount to be used for measuring each of the plurality of measurement items and a processing amount of the report.

### ADVANTAGEOUS EFFECTS OF THE INVENTION

According to one disclosure, the processing capability of the terminal device can be efficiently used in a CSI report.

### BRIEF DESCRIPTION OF DRAWINGS

FIG. 1 is a diagram illustrating an example of a configuration of a wireless communication system 10.
FIG. 2 is a diagram illustrating an example of a configuration of the base station device 200.
FIG. 3 is a diagram illustrating an example of a configuration of the terminal device 100.
FIG. 4 is a diagram illustrating an example of a single-CSI feedback scheme.
FIG. 5 is a diagram illustrating an example of a first scheme as a multi-CSI feedback scheme.
FIG. 6 is a diagram illustrating an example of a priority scheme of the multi-CSI feedback scheme.
FIG. 7 is a diagram illustrating examples of measurement results transmitted in the first scheme and in the priority scheme.
FIGs. 8A to 8E are diagrams illustrating examples of priorities.
FIG. 9 is a diagram illustrating examples of priorities based on a plurality of criteria.
FIGs. 10A to 10E are diagrams illustrating examples of priorities based on a plurality of criteria.
FIG. 11 is a diagram illustrating examples of priorities based on a plurality of criteria.
FIG. 12 is a diagram illustrating an example of an update to TS 38.214 5.2.1.6 CSI processing criteria.

### DESCRIPTION OF EMBODIMENTS

### [First Embodiment]

A first embodiment will be described.

### <Regarding Wireless Communication System 10>

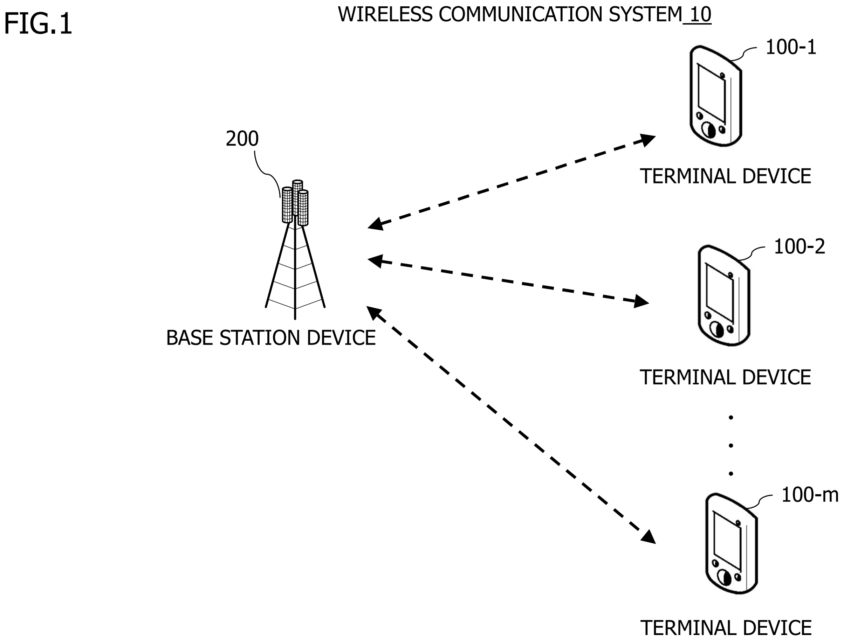

FIG. 1 is a diagram illustrating an example of a configuration of a wireless communication system 10. The wireless communication system 10 includes a base station device 200 and terminal devices 100-1 to 100-m. The wireless communication system 10 is, for example, a communication system supporting a CSI report. In addition, the wireless communication system 10 supports a single-CSI feedback scheme and a multi-CSI feedback scheme.

The base station device 200 is a device that is wirelessly connected to the terminal devices 100-1 to 100-m and performs wireless communication, and is, for example, an eNodeB or a gNodeB. The base station device 200 may be configured by one device, or may be configured by a plurality of devices such as a central unit (CU) and a distributed unit (DU).

The terminal devices 100-1 to 100-m (hereinafter, may be referred to as terminal device 100) are communication devices that are wirelessly connected to the base station device 200 and transmit and receive data, and are, for example, smartphones or tablet terminals.

In the wireless communication system 10, the base station device 200 periodically or non-periodically receives a CSI report from the terminal device 100. The base station device 200 controls the CSI report transmitted by the terminal device 100.

When receiving a CSI-RS, the terminal device 100 measures a predetermined measurement item, and transmits a CSI report including a measurement result to the base station device 200.

### <Example of Configuration of Base Station Device 200>

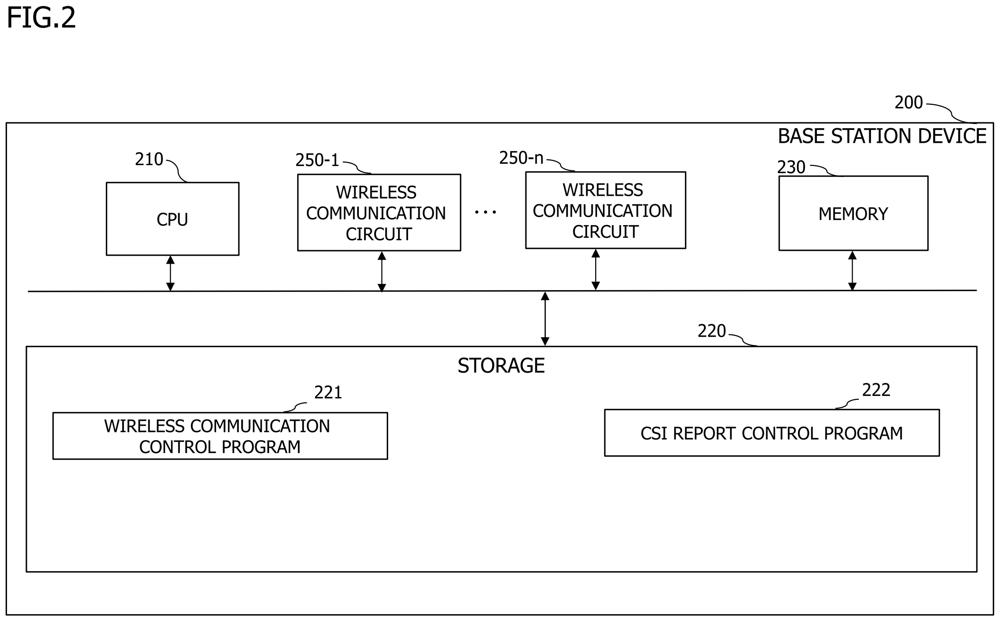

FIG. 2 is a diagram illustrating an example of a configuration of the base station device 200. The base station device 200 includes a central processing unit (CPU) 210, a storage 220, a memory 230, and wireless communication circuits 250-1 to 250-n.

The storage 220 is an auxiliary storage device such as a flash memory, a hard disk drive (HDD), or a solid state drive (SSD) that stores programs and data. The storage 220 stores a wireless communication control program 221 and a CSI report control program 222.

The memory 230 is an area into which the programs stored in the storage 220 are loaded. In addition, the memory 230 may also be used as an area where the programs store data.

The wireless communication circuits 250-1 to 250-n (hereinafter, may be referred to as wireless communication circuit 250) are devices that perform wireless communication with the terminal device 100. The base station device 200 transmits and receives signals (messages) to and from the terminal device 100 via the wireless communication circuit 250. In addition, the wireless communication circuit 250 is, for example, a wireless transceiver circuit, and has antenna ports. The base station device 200 controls the number of antenna ports to be used for communication by turning on/off the wireless communication circuit 250.

The CPU 210 is a processor that loads a program stored in the storage 220 into the memory 230, executes the loaded program, constructs each unit, and implements each process.

By executing the wireless communication control program 221, the CPU 210 constructs a base station communication unit and performs a wireless communication control process. The wireless communication control process is a process of controlling the wireless communication with the terminal device 100 including transmission power. In the wireless communication control process, the base station device 200 is wirelessly connected to the terminal device 100 to transmit and receive signals (messages).

By executing the CSI report control program 222, the CPU 210 constructs a notification unit and performs a CSI report control process. The CSI report control process is a process of instructing the terminal device 100 to transmit a CSI report, transmitting a CSI-RS, and receiving the CSI report. Furthermore, in the CSI report control process, the base station device 200 may notify the terminal device 100 of priorities of the measurement results in CSI reports, or may transmit parameters necessary for calculating the priorities.

### <Example of Configuration of Terminal Device 100>

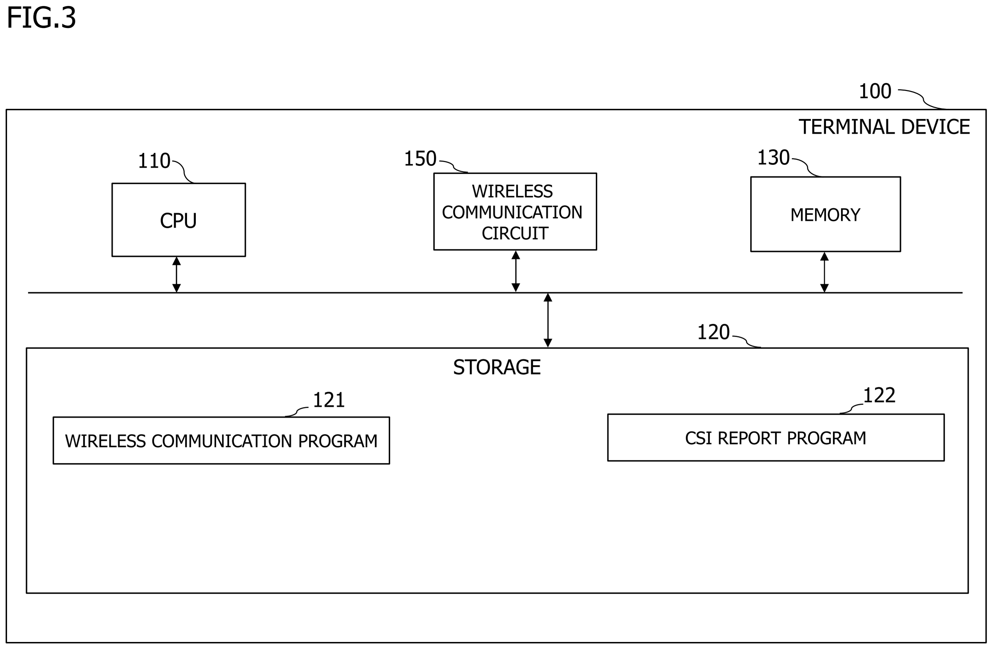

FIG. 3 is a diagram illustrating an example of a configuration of the terminal device 100. The terminal device 100 includes a CPU 110, a storage 120, a memory 130, and a wireless communication circuit 150.

The storage 120 is an auxiliary storage device such as a flash memory, an HDD, or an SSD that stores programs and data. The storage 120 stores a wireless communication program 121 and a CSI report program 122.

The memory 130 is an area into which the programs stored in the storage 120 are loaded. The memory 130 may also be used as an area where the programs store data.

The wireless communication circuit 150 is a device that performs wireless communication with the base station device 200. The terminal device 100 transmits and receives signals (messages) to and from the base station device 200 via the wireless communication circuit 150.

The CPU 110 is a processor that loads a program stored in the storage 120 into the memory 130, executes the loaded program, constructs each unit, and implements each process.

By executing the wireless communication program 121, the CPU 110 constructs a communication unit and performs a wireless communication process. The wireless communication process is a process of performing wireless communication with the base station device 200. In the wireless communication process, the terminal device 100 is wirelessly connected to the base station device 200 to transmit and receive signals (messages).

By executing the CSI report program 122, the CPU 110 constructs a control unit and performs a CSI report process. The CSI report process is a process of receiving a CSI-RS and transmitting a CSI report including a measurement result obtained by performing measurements and calculations in accordance with an instruction from the base station device 200. In addition, when the processing capability is insufficient in processing the CSI reports, the terminal device 100 determines a measurement item to be updated (transmitted) according to the priority. In the multi-CSI feedback scheme, the terminal device 100

In addition, each process will be described below by using the multi-CSI feedback scheme as an example, but the same can also be applied to, for example, a case where a plurality of single-CSI feedbacks are executed in parallel.

### <Outline of CSI Report>

The CSI report is a report including a measurement result when the terminal device 100 receives a CSI-RS. The base station device 200 requests the terminal device 100 to transmit a CSI report in order to determine optimal parameters for wireless signal transmission to the terminal device (hereinafter, may be referred to as downlink transmission). The CSI report includes, for example, the following measurement result (information elements) related to downlink transmission.
- Rank Indicator (RI)
- Precoding Matrix Indicator (PMI)
- Channel Quality Indicator (CQI)
- Layer Indicator (LI)
- CSI-RS Resource Indicator (CRI)
- Layer-1 Reference Signal Received Power (L1-RSRP)
- Layer-1 Signal to Interference & Noise Ratio (L1-SINR)

In the CSI report, if the number of the spatial elements or the transmission power changes, the measurement result may change. For example, if the number of antenna ports changes, PMI, RI, CQI, CRI, etc. may change. In addition, if the transmission power changes, RI, CQI, LI, LI-RSRP, L1-SINR, etc. may change.

### <Single-CSI Feedback Scheme>

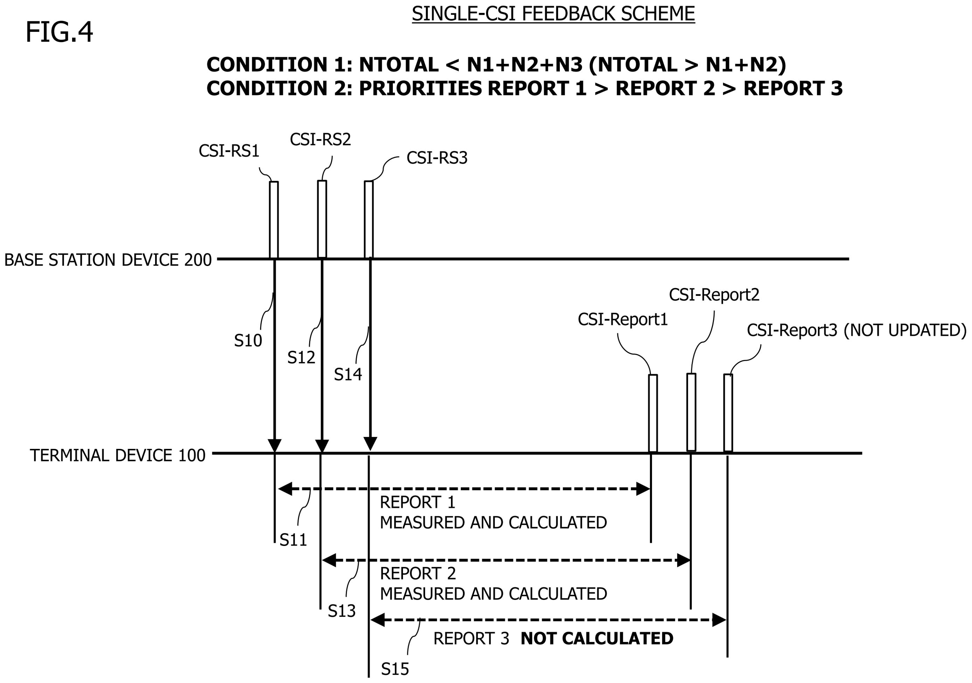

The single-CSI feedback scheme will be described. FIG. 4 is a diagram illustrating an example of a single-CSI feedback scheme. The terminal device 100 receives a CSI-RSx (x is an integer), measures and calculates a measurement item x, and transmits CSI-Report x including the measurement result x to the base station device 200. The measurement item is, for example, a pattern of one spatial element or transmission power. That is, the measurement result included in one CSI report includes one or more information elements (e.g., RI, PMI, CQI, CRI, LI, L1-RARP, and L1-SINR) corresponding to the pattern of one spatial element or the offset of the transmission power Here, the same information elements or different information elements may be included between the CSI reports. For example, CSI-Report 1 includes CRI, RI, PMI, and CQI corresponding to 32 antenna ports. CSI-Report 2 includes CRI corresponding to 16 antenna ports. CSI-Report 3 includes CRI, RI, PMI, and CQI corresponding to 8 antenna ports. In addition, for example, CSI-Report 1 includes CRI, RI, PMI, and CQI corresponding to an offset of transmission power between a CSI-RS and a PDSCH of 0dB. CSI-Report 2 includes CRI, RI, and CQI corresponding to an offset of transmission power between a CSI-RS and a PDSCH of -3dB. CSI-Report 3 includes CRI, RI, and CQI corresponding to an offset of transmission power between a CSI-RS and a PDSCH of -6dB. The measurement item is, for example, one measurement purpose. That is, the measurement result included in one CSI report includes one or more information elements (e.g., RI, PMI, CQI, CRI, LI, L1-RARP, and L1-SINR) corresponding to one measurement purpose. For example, CSI-Report 1 includes CRI and L1-RSRP, corresponding to a purpose of channel measurement. CSI-Report 2 includes CRI corresponding to a purpose of beam management. CSI-Report 3 includes L1-SINR corresponding to a purpose of mobility management.

N indicates a processing capability. NTOTAL indicates a processing capability (total processing amount) that can be used by the terminal device 100 for measuring, calculating, and transmitting a CSI report. N1 to N3 indicate processing capabilities (individual processing amounts) necessary for measuring, calculating, and transmitting CSI-Report 1 to CSI-Report 3. Hereinafter, the processing capability may be expressed as the number of CSI processing units, and is indicated by an integer. Hereinafter, the processing capability necessary for generating or updating a CSI report includes processing capability necessary for measuring and calculating a measurement item in the CSI report.

Further, in FIG. 4, it is assumed that NTOTAL is smaller than the total value of N1 to N3, that is, the number of CSI processing units that can be used by the terminal device 100 for transmitting a CSI report is smaller than the total (total processing amount) of the numbers of CSI processing units necessary for transmitting all of CSI-Report 1 to CSI-Report 3 (condition 1). On the other hand, it is assumed that NTOTAL is larger than the total value of N1 and N2, that is, the number of CSI processing units that can be used by the terminal device 100 for transmitting a CSI report is larger than the total number of CSI processing units necessary for transmitting two reports, CSI-Report 1 and CSI-Report 2 (condition 1). Further, the priorities of the CSI reports are as follows: CSI-Report 1, CSI-Report 2, and CSI-Report 3 in descending order (condition 2).

In the single-CSI feedback scheme, when the total number of CPUs required to transmit all CSI reports, each including a measurement result, is smaller than (or below) the number of CPUs of the terminal device 100, the terminal device performs measurements and calculations for all the measurement items, and transmits the CSI reports, each including a measurement result, to the base station device 200.

However, in FIG. 4, since NTOTAL is smaller than the total value of N1 to N3, the terminal device 100 is not capable of generating or updating all the CSI reports each including a measurement result. The process in this case will be described below with reference to FIG. 4.

The base station device 200 transmits CSI-RS1 to the terminal device 100 (S10). The terminal device 100 receives CSI-RS1, measures and calculates measurement item 1 (S11), and transmits CSI-Report 1 including measurement result 1 to the base station device 200.

The base station device 200 transmits CSI-RS2 to the terminal device 100 (S12). The terminal device 100 receives CSI-RS2, measures and calculates measurement item 2 (S13), and transmits CSI-Report 2 including measurement result 2 to the base station device 200.

The base station device 200 transmits CSI-RS3 to the terminal device 100 (S14). However, since the number of CSI processing units is insufficient, the terminal device 100 does not measure and calculate measurement item 3 in CSI-Report 3 having the lowest priority (S15), and transmits CSI-Report 3 including measurement result 3 that is not updated (e.g., a measurement result for measurement item 3 measured and calculated in the past) to the base station device 200. In addition, if there is no measurement result for measurement item 3 measured and calculated in the past, measurement result 3 may be an initial value or a fixed value (a value indicating that no measurement or calculation has been performed).

### <Multi-CSI Feedback Scheme (First Scheme)>

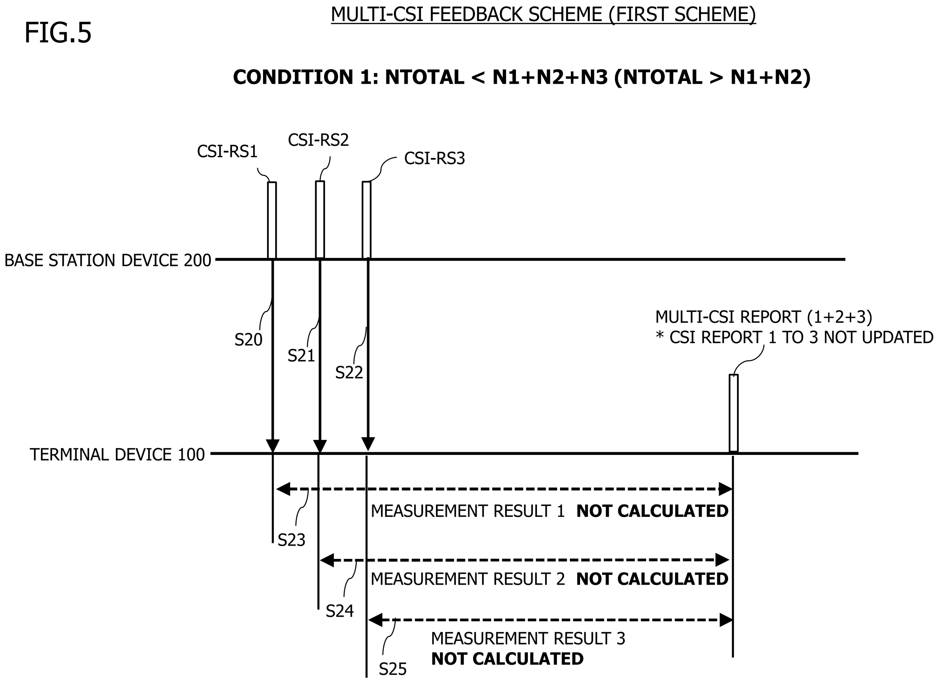

A first scheme as a multi-CSI feedback scheme will be described. FIG. 5 is a diagram illustrating an example of a first scheme as a multi-CSI feedback scheme. The terminal device 100 receives CSI-RSx to CSI-RSy (y is an integer), measures and calculates measurement items x to y, and transmits CSI reports (multi-CSI reports) including measurement results x to y to the base station device 200. It is assumed that the condition for the number of CSI processing units is similar to that in FIG. 4. The measurement item is, for example, a pattern of one spatial element or transmission power. That is, one measurement result includes one or more information elements (e.g., RI, PMI, CQI, CRI, LI, L1-RARP, L1-SINR) corresponding to the pattern of one spatial element or the transmission power offset. Here, the same information elements or different information elements may be included between the measurement results. For example, measurement result 1 includes CRI, RI, PMI, and CQI corresponding to 32 antenna ports. Measurement result 2 includes CRI corresponding to 16 antenna ports. Measurement result 3 includes CRI, RI, PMI, and CQI corresponding to 8 antenna ports. In addition, for example, measurement result 1 includes CRI, RI, PMI, and CQI corresponding to an offset of transmission power between a CSI-RS and a PDSCH of 0dB. Measurement result 2 includes CRI, RI, and CQI corresponding to an offset of transmission power between a CSI-RS and a PDSCH of -3dB. Measurement result 3 includes CRI, RI, and CQI corresponding to an offset of transmission power between a CSI-RS and a PDSCH of -6dB. The measurement item is, for example, one measurement purpose. That is, the measurement result included in one measurement result includes one or more information elements (e.g., RI, PMI, CQI, CRI, LI, L1-RARP, and L1-SINR) corresponding to one measurement purpose. For example, measurement result 1 includes CRI and L1-RSRP, corresponding to a purpose of channel measurement. Measurement result 2 includes CRI corresponding to a purpose of beam management. Measurement result 3 includes L1-SINR corresponding to a purpose of mobility management.

In the first scheme, when the total number of CSI processing units required to transmit a multi-CSI report including all the measurement results is smaller than (or below) the number of CSI processing units of the terminal device 100, the terminal device 100 performs measurements and calculations for all the measurement items and transmits the multi-CSI report including all the measurement results to the base station device 200. However, in FIG. 5, since the condition for the number of CSI processing units is similar to that in FIG. 4, the terminal device 100 is not capable of generating or updating a multi-CSI report including all the measurement results. The process in this case will be described below with reference to FIG. 5.

The base station device 200 transmits CSI-RS1 to CSI-RS3 to the terminal device 100 (S20 to S22). The terminal device 100 receives CSI-RS1 to CSI-RS3.

However, since the number of CPUs of the terminal device 100 is smaller than the total number of CPUs necessary for all the measurement items 1 to 3, the terminal device 100 determines not to perform (determines that it is not capable of performing) measurements and calculations for all the measurement items, and does not perform measurement and calculation for all the measurement items (S23 to S25).

Then, the terminal device 100 transmits a multi-CSI report including measurement results 1 to 3 that are not updated (e.g., measurement results for measurement items 1 to 3 measured and calculated in the past) to the base station device 200. In addition, if there are no measurement results for measurement item 3 measured and calculated in the past, measurement results 1 to 3 may be initial values or fixed values (values indicating that no measurements or calculations have been performed).

### <Multi-CSI Feedback Scheme (Priority Scheme)>

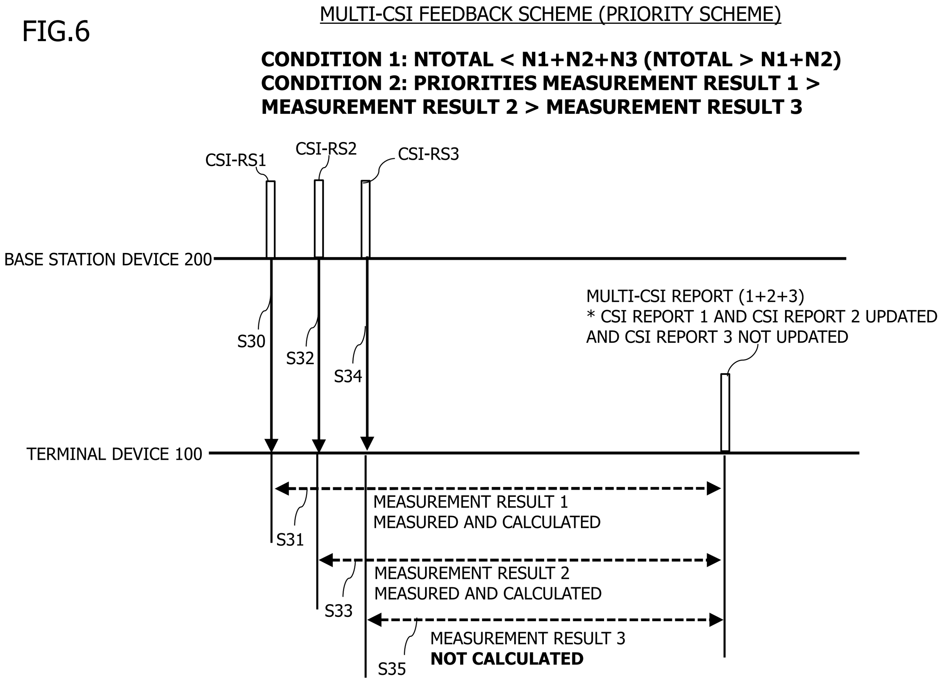

A priority scheme as a multi-CSI feedback scheme will be described. FIG. 6 is a diagram illustrating an example of a priority scheme of the multi-CSI feedback scheme. The terminal device 100 receives CSI-RSx to CSI-RSy (y is an integer), measures and calculates measurement items x to y, and transmits CSI reports (multi-CSI reports) including measurement results x to y to the base station device 200. That is, the process when the number of CSI processing units is not insufficient is similar to that in the first scheme. It is assumed that the condition for the number of CSI processing units is similar to that in FIG. 4. In the following description, measurement and calculation of a measurement item may be referred to as update of a measurement item.

The priority scheme is a scheme in which, when the number of CSI processing units of the terminal device 100 is smaller than the total number of CSI processing units necessary for updating all the measurement items, some of the measurement items are updated according to the priorities in a range in which the number of CSI processing units is not insufficient.

In the priority scheme, when the total number of CSI processing units required to transmit a multi-CSI report including all the measurement results is smaller than (or below) the number of CSI processing units of the terminal device 100, the terminal device 100 performs measurements and calculations for all the measurement items and transmits the multi-CSI report including all the measurement results to the base station device 200. However, in FIG. 6, since NTOTAL is smaller than the total value of N1 to N3, the terminal device 100 is not capable of transmitting all the CSI reports each including a measurement result. The process in this case will be described below with reference to FIG. 6.

In the priority scheme, since NTOTAL is smaller than the total value of N1 to N3, the terminal device 100 determines that it is not capable of updating all the measurement items. Then, the terminal device 100 determines that the measurement items 1 and 2 can be updated according to the priorities. The terminal device 100 receives a CSI-RS in a state where the determination is made before the CSI-RS is received.

In the sequence of FIG. 6, the base station device 200 transmits CSI-RS1 to the terminal device 100 (S30). Since it is determined to update measurement item 1, the terminal device 100 receives CSI-RS1 and updates measurement item 1 (S31).

The base station device 200 transmits CSI-RS2 to the terminal device 100 (S32). Since it is determined to update measurement item 2, the terminal device 100 receives CSI-RS2 and updates measurement item 2 (S33).

The base station device 200 transmits CSI-RS3 to the terminal device 100 (S34). However, since it is determined not to update measurement item 3, the terminal device 100 does not update measurement item 3 in CSI-Report 3 having the lowest priority (S35).

Then, the terminal device 100 generates a multi-CSI report including measurement results 1 and 2 obtained by updating measurement items 1 and 2 and measurement result 3 obtained by not updating measurement item 3, and transmits the generated multi-CSI report to the base station device 200.

### <Comparison Between First Scheme and Priority Scheme>

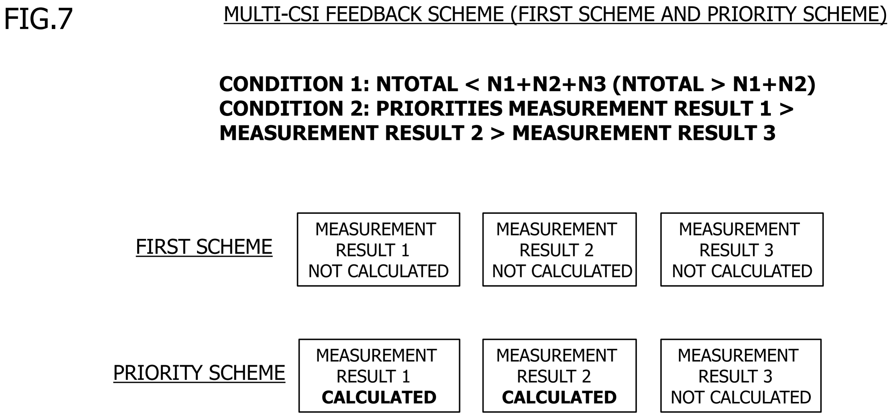

FIG. 7 is a diagram illustrating examples of measurement results transmitted in the first scheme and in the priority scheme. As illustrated in FIG. 7, in a case where the condition for CSI processing units and the condition for priorities are condition 1 and condition 2, in the first scheme, measurement results in which all the measurement items are not updated are transmitted. On the other hand, in the priority scheme, it is not possible to update all the measurement results because the number of CSI processing units is insufficient, but updated measurement results for some of the measurement items are transmitted. That is, in the priority scheme, some of the measurement items can be preferentially updated, and the number of CSI processing units (processing capability) can be efficiently used.

Note that, in a case where there is a measurement item that is not updated in the multi-CSI feedback scheme, for example, a measurement result for the non-updated item is not transmitted, and only an updated measurement result is transmitted.

Furthermore, in a case where there is a measurement item that is not updated in the multi-CSI feedback scheme, for example, all the measurement results (an updated measurement result and a non-updated measurement result) may be transmitted. In this case, for example, the terminal device 100 maps the updated measurement result to the front portion, inserts an indication at the beginning of the report (or between the updated measurement result and the non-updated measurement result) to clearly indicate which one the updated portion (measurement item) is. Furthermore, the terminal device 100 may indicate whether each measurement item has been updated or indicate a non-updated (or updated) measurement item, for example, by using a flag or the like corresponding to the number (identifier) of the measurement item. Furthermore, the terminal device 100 may indicate whether each measurement item has been updated using a bitmap. In this case, for example, there are three measurement results, three bits are used to indicate whether the respective results have been updated, with the most significant bit indicating whether measurement result 1 has been updated. For example, when the bit is 1, this indicates that the measurement result has been updated, when the bit is 0, this indicates that the measurement result has not been updated. Note that, when the bit is 0, this may indicate that the measurement result has been updated, and when the bit is 1, this may indicate that the measurement result has not been updated. In addition, whether measurement result 1 has been updated may be indicated by the least significant bit. Note that the correspondence relationship between each bit of the bitmap and each measurement result may be set, for example, by an RRC message transmitted from the base station device 200 to the terminal 100.

Hereinafter, a method for calculating the number of CSI processing units and a method for determining priorities in the priority scheme will be described.

### <Method for Calculating Number of CSI Processing Units>

The terminal device 100 calculates the number of CSI processing units (individual processing amount) necessary for each measurement item.

The number of CSI processing units (total processing amount) that can be used by the terminal device 100 to update and transmit the CSI reports is the sum of the calculated numbers of CSI processing units for the respective measurement items.

Furthermore, the number of CSI processing units that can be used by the terminal device 100 to update and transmit the CSI reports may be a value set (calculated) in advance. At this time, the method for calculating the number of CSI processing units that can be used by the terminal device 100 to update and transmit the CSI reports does not need to be the same as the method for calculating the number of CSI processing units required for each measurement item.

### <1. Method for Calculating Number of CSI Processing Units According to Referred-to CSI-RS>

The terminal device 100 calculates a number corresponding to the number of CSI-RSs referred to by each measurement item as a necessary number of CSI processing units.

For example, the number of CSI processing units is equal to the number of referenced-to CSI-RSs. In this calculation method, for example, when measurement item 1 refers to one CSI-RS and measurement item 2 refers to two CSI-RSs, the number of CSI processing units for measurement item 1 is one and the number of CSI processing units for measurement item 2 is two. The number of CSI processing units that can be used by the terminal device 100 to update and transmit the CSI reports is the sum of the numbers of referred-to CSI-RSs for the respective measurement items. In this case, the number of CSI processing units that can be used by the terminal device 100 to update and transmit the CSI reports is 3.

For example, the number of CSI processing units is proportional to the number of referenced-to CSI-RSs. In this calculation method, for example, when measurement item 1 refers to one CSI-RS and measurement item 2 refers to two CSI-RSs, the number of CSI processing units for measurement item 2 is twice the number of CSI processing units for measurement item 1. The sum of the numbers of CSI processing units for the respective measurement items is calculated as the number of CSI processing units that can be used by the terminal device 100 to update and transmit the CSI reports. In this case, the number of CSI processing units that can be used by the terminal device 100 to update and transmit the CSI reports is three times the number of CSI processing units for measurement item 1.

In addition, for example, the number of CSI processing units does not need to be simply proportional to the number of referenced-to CSI-RSs. In this calculation method, for example, when measurement item 1 refers to one CSI-RS and measurement item 2 refers to two CSI-RSs, the number of CSI processing units for measurement item 2 is equal to or larger than the number of CPUs of measurement item 1, but the number of CSI processing units for measurement item 2 does not need to be simply twice the number of CPUs of measurement item 1. The number of CSI processing units that can be used by the terminal device 100 to update and transmit the CSI reports is calculated as the sum of the numbers of CSI processing units for the respective measurement items.

### <2. Method for Calculating Number of CSI Processing Units According to Number of Antenna Ports>

The terminal device 100 calculates a number corresponding to the number of antenna ports for a measurement item as a necessary number of CSI processing units.

For example, the number of CSI processing units is proportional to the number of antenna ports for the measurement item. In this calculation method, for example, when the number of antenna ports for measurement item 1 is 32 and the number of antenna ports for measurement item 2 is 16, the number of CSI processing units for measurement item 1 is twice the number of CSI processing units of the measurement item. The sum of the numbers of CSI processing units for the respective measurement items is calculated as the number of CSI processing units that can be used by the terminal device 100 to update and transmit the CSI reports. In this case, the number of CSI processing units that can be used by the terminal device 100 to update and transmit the CSI reports is three times the number of CSI processing units for measurement item 1.

For example, the number of CSI processing units does not need to be simply proportional to the number of antenna ports for the measurement item. In this calculation method, for example, when the number of antenna ports for measurement item 1 is 32 and the number of antenna ports for measurement item 2 is 16, the number of CPUs for measurement item 1 is equal to or larger than the number of CPUs for measurement item 2, but the number of CPUs for measurement item 1 does not need to be simply twice the number of CPUs for measurement item 2. The number of CSI processing units that can be used by the terminal device 100 to update and transmit the CSI reports is calculated as the sum of the numbers of CSI processing units for the respective measurement items.

### <3. Calculation Method Based on Average With Respect to Total Number of CSI Processing Units>

The terminal device 100 calculates the number of CSI processing units for the entire multi-CSI report, and calculates an average value obtained by dividing the number of CSI processing units for the entire multi-CSI report by the number of measurement items as the number of CSI processing units for each measurement item. Note that the number of CSI processing units for the entire multi-CSI report is calculated, for example, according to the number of referred-to CSI-RSs. As a method for calculating the number of CSI processing units for the entire multi-CSI report, for example, the method for calculating the number of CSI processing units in the single-CSI feedback scheme may be applied.

### <4. Calculation Method Based on Combination of Number of Referred-to CSI-RSs and Number of Antenna Ports>

The terminal device 100 may calculate a number corresponding to the number of referred-to CSI-RSs and the number of antenna ports as the number of CSI processing units. In this case, the larger the number of referred-to CSI-RSs, the larger the number of CSI processing units, and the larger the number of antenna ports, the larger the number of CSI processing units.

### <Method for Determining Priorities>

When NTOTAL is smaller than the total number of CSI processing units necessary for updating all the measurement items, the terminal device 100 selects measurement items according to the priorities such that the total number of CSI processing units necessary for updating all the measurement items is equal to or smaller than NTOTAL. The priorities are determined, for example, by the following method.

Note that a plurality of different measurement items may have the same priority depending on the method for determining priorities or the setting of priorities. In this case, for example, preferences are determined according to an instruction from the base station device 200. Furthermore, in this case, for example, the terminal device 100 may determine preferences based on its own determination criterion. Furthermore, in this case, for example, the terminal device 100 may determine preferences randomly.

### <1. Priorities Based on Single Criterion>

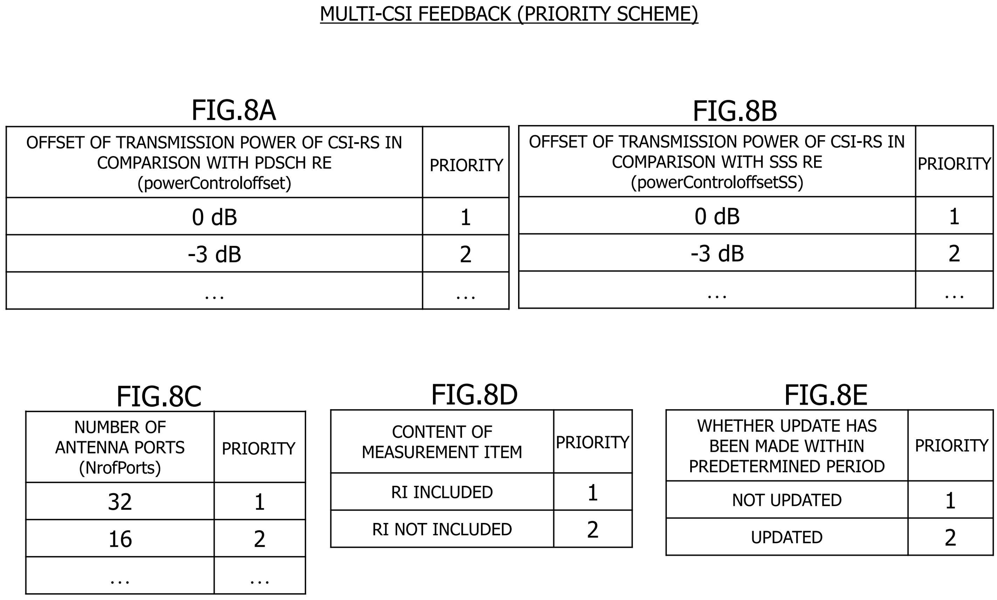

The terminal device 100 determines priorities according to one criterion. FIG. 8 is a diagram illustrating examples of priorities. Note that the smaller the numerical value, the higher the priority. Alternatively, the larger the numerical value, the higher the priority.

The criterion relates to, for example, transmission power. The transmission power is, for example, an offset of transmission power of CSI-RS in comparison with PDSCH RE as illustrated in FIG. 8(A). In addition, the transmission power is, for example, an offset of transmission power of CSI-RS in comparison with SSS RE as illustrated in FIG. 8(B).

Further, the criterion relates to, for example, a spatial element. The spatial element is, for example, the number of antenna ports as illustrated in FIG. 8(C).

Further, the criterion relates to, for example, the content of the measurement item. The content of the measurement item is whether to include a predetermined information element in the measurement item, for example, whether to include RI as illustrated in FIG. 8(D).

Furthermore, the criterion relates to, for example, an update frequency. For example, as illustrated in FIG. 8(E), the update frequency is whether an update has been made within a predetermined period. In addition, the update frequency is, for example, whether an update has been made before a set timer expires. The timer starts when a measurement result is generated for the first time, and resets when the measurement result is updated.

### <2. Priorities Based on Multiple Criteria>

The terminal device 100 determines priorities according to a plurality of criteria. The criteria are, for example, similar to the method for determining priorities based on a single criterion.

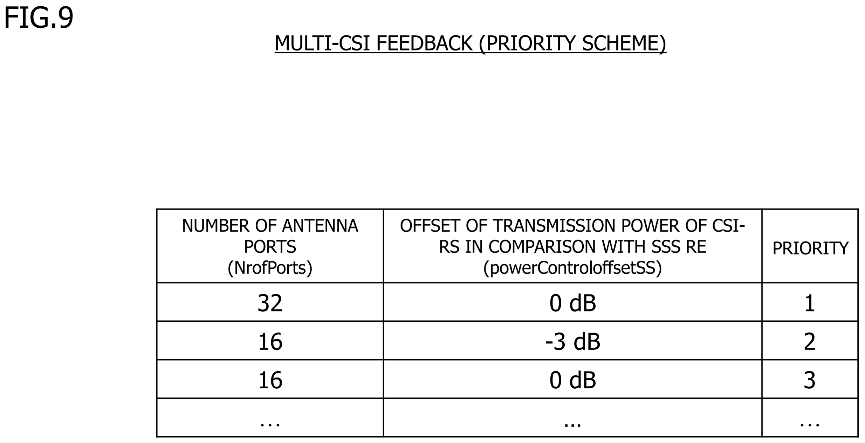

FIG. 9 is a diagram illustrating examples of priorities based on a plurality of criteria. The terminal device 100 determines priorities by using, for example, two criteria: the number of antenna ports and an offset of transmit power of CSI-RS in comparison with SSS RE.

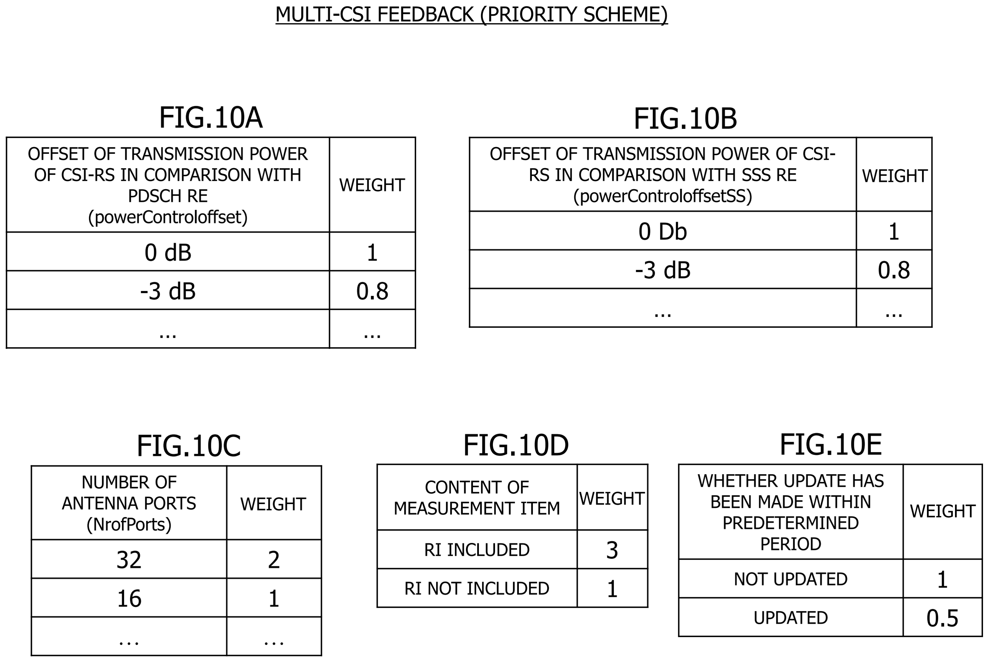

FIG. 10 is a diagram illustrating examples of priorities based on a plurality of criteria. For example, as illustrated in FIG. 10, the terminal device 100 sets a weight for each criterion. Then, the terminal device 100, for example, adds the weight and determines that a measurement item having a smaller added value has a higher priority. In addition, as illustrated in FIG. 10(D), a criterion considered to be particularly important may be weighted less than the other criteria. Furthermore, the terminal device 100 adds the weight and determines that a measurement item having a larger added value has a higher priority. A criterion considered to be particularly important may be weighted more than the other criteria.

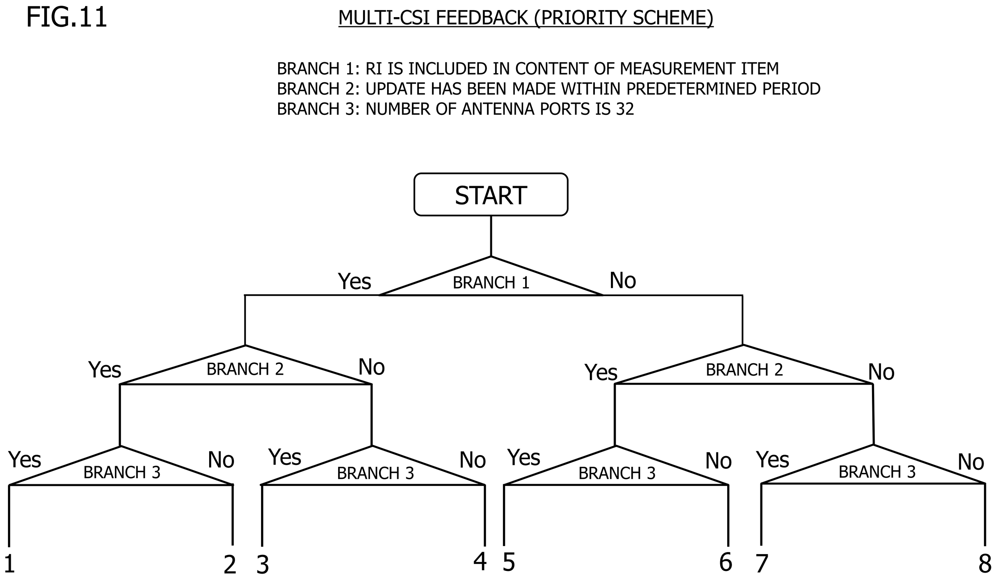

FIG. 11 is a diagram illustrating examples of priorities based on a plurality of criteria. Note that the lower numerical values in FIG. 11 indicate priorities. For example, the terminal device 100 determines priorities by performing branching in descending order of importance. The method for determining priorities in FIG. 11 has three branch types, that is, branch 1 indicating whether RI is included in the content of the measurement item, branch 2 indicating whether an update has been made within a predetermined period, and branch 3 indicating the number of antenna ports is 32. The terminal device 100 determines priorities by determining whether each branch is correct or incorrect.

FIG. 11 has three branch types, but the number of branch types may be two or less or four or more. In addition to two branches toward "Yes" and "No", three or more branches may be provided.

### <3. Priorities Based on Number of CSI Processing Units>

For example, the terminal device 100 may determine priorities according to the numbers of CSI processing units necessary for measurement items. For example, in order to update as many measurement items as possible, the terminal device 100 assigns a higher priority to a measurement item requiring a smaller number of CSI processing units.

### <4. Priorities Based on Random Selection>

The terminal device 100 may randomly determine priorities of measurement items. If randomness is ensured, it is assumed that the update frequency for each measurement item has an approximate value by random selection.

### [Other Embodiments]

The above-described embodiments may be used in combination. For example, the terminal device 100 may support all or any combination of the single-CSI feedback scheme, the first scheme of the multi-CSI feedback scheme, and the priority scheme of the multi-CSI feedback scheme. In a case where the terminal device 100 supports a plurality of schemes, the terminal device 100 follows an instruction from the base station device 200 as to which scheme is used to transmit a CSI report.

For example, the base station device 200 may instruct the terminal device 100 as to which method for determining priorities or which method for calculating the number of CSI processing units is used. Furthermore, which method for determining priorities or which method for calculating the number of CSI processing units is used by the terminal device 100 may be appropriately changed, for example, according to some conditions (e.g., radio conditions, network operation conditions, etc.).

Furthermore, for example, the base station device 200 may instruct the terminal device 100 as to priorities.

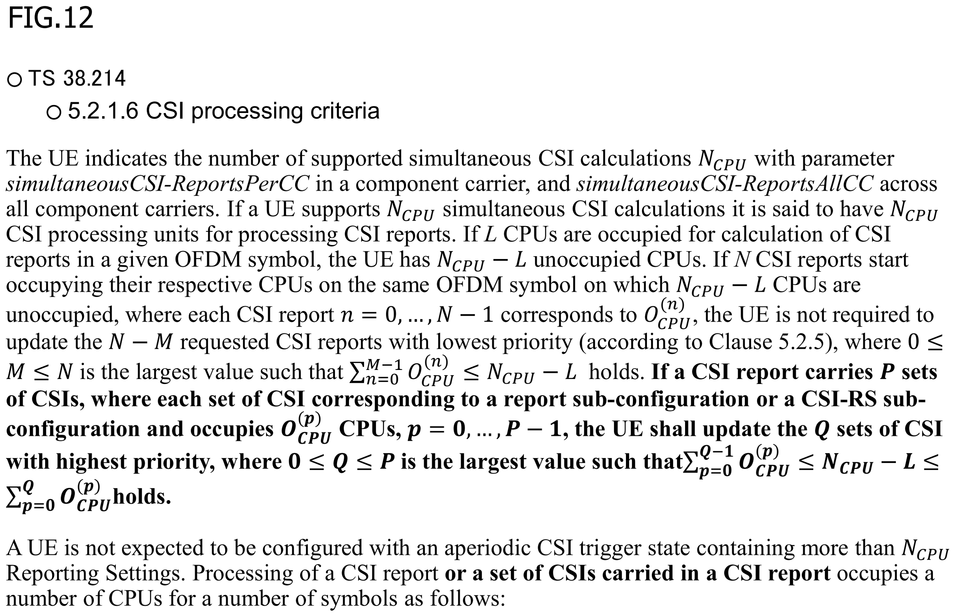

It is assumed that the priority scheme is described in the 3GPP (registered trademark) specifications. FIG. 12 is a diagram illustrating an example of an update to TS 38.214 5.2.1.6 CSI processing criteria. In FIG. 12, a sentence written with bold letters indicates a changed portion.

### REFERENCE SIGNS LIST

10: WIRELESS COMMUNICATION SYSTEM
100: TERMINAL DEVICE
110: CPU
120: STORAGE
130: MEMORY
150: WIRELESS COMMUNICATION CIRCUIT
200: BASE STATION DEVICE
210: CPU
220: STORAGE
221: WIRELESS COMMUNICATION CONTROL PROGRAM
222: CSI REPORT CONTROL PROGRAM
230: MEMORY
250: WIRELESS COMMUNICATION CIRCUIT

## Claims

1. A terminal device comprising:
a communicator configured to perform a report process of receiving a reference signal from a base station device, measuring the reference signal for a plurality of measurement items, and transmitting a report to the base station device, the report including a plurality of measurement results corresponding to the plurality of measurement items; and
a controller configured to assign priorities to the plurality of measurement results, respectively, and determine an individual processing amount to be used for measuring each of the plurality of measurement items and a processing amount of the report.

2. The terminal device according to claim 1, wherein
when a total processing amount that is usable for the report process by the terminal device is smaller than a sum of the individual processing amounts used for measuring the plurality of measurement items, respectively, or the processing amount of the report, the controller selects some measurement items from among the plurality of measurement items according to the priorities, and measures the selected some measurement items.

3. The terminal device according to claim 1, wherein
the controller calculates the individual processing amount according to the number of reference signals used for the measurement item.

4. The terminal device according to claim 1, wherein
the controller calculates the processing amount of the report according to the measurement items and the number of reference signals used for each of the measurement items.

5. The terminal device according to claim 1, wherein
the priorities are determined according to a parameter related to transmission power of the measurement item.

6. The terminal device according to claim 1, wherein
the priorities are determined according to a parameter related to a spatial element of the measurement item.

7. The terminal device according to claim 1, wherein
the priorities are determined according to whether a predetermined information element is included in the measurement item.

8. The terminal device according to claim 1, wherein
the priorities are determined according to an update frequency of the measurement item.

9. The terminal device according to claim 1, wherein
the priorities are determined according to at least two elements among a parameter related to transmission power of the measurement item, a parameter related to a spatial element of the measurement item, whether a predetermined information element is included in the measurement item, and an update frequency of the measurement item.

10. The terminal device according to claim 1, wherein
the report includes information indicating the selected some measurement items.

11. The terminal device according to claim 1, further comprising:
a receptor configured to receive information regarding the priorities of the plurality of measurement items from the base station device.

12. A base station device comprising:
a base station communicator configured to transmit a reference signal to a terminal device and receive a report from the terminal device, the report including a plurality of measurement results corresponding to a plurality of measurement items obtained by measuring the reference signal; and
a notifier configured to notify the terminal device of information regarding priorities of the plurality of measurement items,
wherein the notifier causes the terminal device to assign a priority to each of the plurality of measurement results by transmitting the information regarding the priorities.

13. A wireless communication system comprising a base station device and a terminal device,
wherein the base station device transmits a reference signal to the terminal device,
the terminal device receives the reference signal, measures the reference signal, and transmits a report to the base station device, the report including a plurality of measurement results corresponding to a plurality of measurement items,
the base station device receives the report, and
when a total processing amount that is usable for the measurement is smaller than a sum of individual processing amounts used for measuring the plurality of measurement items, respectively, the terminal device selects some measurement items from among the plurality of measurement items according to the received information regarding the priorities, and measures the selected some measurement items.
